# EUROPÄISCHE PATENTSCHRIFT

(11) **EP 3 403 847 B1**
(45) Veröffentlichungstag und Bekanntmachung des Hinweises auf die Patenterteilung: **02.10.2019**
(21) Anmeldenummer: 17000853.6
(22) Anmeldetag: 17.05.2017
(51) Int. Cl.: B32B 38/00, B44C 1/24, B44C 5/04, B44F 9/02, E04F 15/10, B32B 38/06, B32B 38/10, B32B 38/14

(54) **VERFAHREN ZUR HERSTELLUNG EINER MEHRSCHICHTIGEN MATERIALBAHN MIT DEKORSYNCHRON STRUKTURIERTER OBERFLÄCHE SOWIE DIE VERWENDUNG DERSELBEN**
METHOD FOR THE PRODUCTION OF MULTI-PLY WEB MATERIAL WITH A SURFACE STRUCTURED IN LINE WITH DECORATION, AND USE THEREOF
PROCÉDÉ DE FABRICATION D'UNE BANDE DE MATÉRIAU MULTICOUCHES COMPRENANT UNE SURFACE STRUCTURÉE PAR EMBOSSAGE PAR REPÉRAGE ET SON UTILISATION

(43) Veröffentlichungstag der Anmeldung: 21.11.2018
(73) Patentinhaber: SURTECO GmbH, 86647 Buttenwiesen (DE)
(72) Erfinder: Haller, Heinz, 73207 Plochingen (DE); Pachowiak, Horst, 86672 Thierhaupten (DE); Wentzel, Detlef, 89188 Merklingen (DE)
(74) Vertreter: Müller-Boré & Partner Patentanwälte PartG mbB

(56) Entgegenhaltungen:
- EP-A2- 2 905 135
- DE-A1-102012 022 461
- US-A1- 2015 210 033
- US-B1- 6 319 349

## Beschreibung

Die vorliegende Erfindung beschreibt ein Verfahren zur Herstellung einer mehrschichtigen Materialbahn mit dekorsynchron strukturierter Oberfläche, geeignet zur Verwendung in kontinuierlichen oder diskontinuierlichen Beschichtungsanlagen zur Herstellung von Verbundmaterialien mit dekorsynchron strukturierter Oberfläche. Das erfindungsgemäße Verfahren führt nach der entsprechenden Anwendung zu Verbundwerkstoffen (Laminaten und/oder beschichteten Holzfaserwerkstoffen), die mit einer strukturierten Dekoroberfläche versehen sind und als Oberflächenmaterial für Fußböden, Möbel und im Innenausbau (Decken- und Wandverkleidungen) Verwendung finden. Unter Dekor versteht man dabei die Darstellung von ein- und mehrfarbigen Strukturen zur Reproduktion bzw. Produktion von Natural- und Fantasiedekoren.

Aus dem Stand der Technik sind Verfahren zur Herstellung von Verbundwerkstoffen mit kontinuierlichen und diskontinuierlichen Pressverfahren bekannt. Im kontinuierlichen Verfahren erfolgt die Strukturierung der Laminatoberflächen durch die Verwendung strukturierter Stahlbänder oder strukturierter mitlaufender Trennpapiere bzw. -folien sowie im diskontinuierlichen Verfahren durch den Einsatz strukturierter Pressbleche.

Im kontinuierlichen Prozess (bekannt als CPL-Verfahren) hat sich die dekorsynchrone Abstimmung der Struktur der eingesetzten Stahlbänder oder Trennpapiere bzw. -folien auf ein bahnförmig einbezogenes Dekormuster als schwierig bis unmöglich erwiesen.

Im diskontinuierlichen Verfahren wird die aufgedruckte bahnförmige Dekorstruktur (Imprägnate und/oder oberflächenlackierte Trägermaterialien) zu einem Pressblech mit auf das Dekormuster abgestimmter Prägung ausgerichtet. Das angewandte Verfahren zeichnet sich durch eine hochgradige Komplexität und erforderliche kostenintensive Investitionen in die notwendigen Pressbleche sowie die anlagentechnische Steuerung des Prozesses aus. Die Komplexität des Prozesses reicht bis in die Vorstufe zur Herstellung der notwendigen bahnförmigen Trägermaterialien der Dekormuster, die in der Regel Zellulosefasern beinhalten. Die eingebrachten Zellstofffasern verfügen über hygroskopische Eigenschaften und die Tendenz, sich nach Aufnahme von Feuchtigkeit auszudehnen. Dieses Phänomen der Beeinflussung der Dimensionsstabilität durch die aufgenommene Feuchtigkeit ist in bekannter Fachliteratur kommuniziert und nachvollziehbar beschrieben. Die Komplexität der Prozesse liegt darin, während der Bearbeitungsphasen Dimensionsveränderungen des verwendeten bahnförmigen Druckträgers infolge von Druck und Imprägnierung weitestgehend zu verhindern oder zumindest zu steuern, um eine Übereinstimmung des gedruckten Designs zum vorgefertigten dekorsynchron strukturierten Pressblech zu gewährleisten. Sowohl beim Bedrucken des zellstoffhaltigen Trägermaterials als auch in einem Imprägnierungsprozess wirken wasserverdünnte Medien (Druckfarben bzw. Imprägnierungslösungen) auf das bedruckte Trägermaterial ein. Die Kombination der erwähnten hygroskopischen und dimensionsverändernden Einflüsse auf ein bahnförmiges Trägermaterial mit den erforderlichen Bahnzügen zur Führung der Materialbahn und den notwendigen Trocknungsprozessen im Druck- und/oder Imprägnierungsprozess führen zur erwähnten hohen Komplexität des diskontinuierlichen Verfahrens.

DE 10 2011 052 834 A1 beschreibt ein Verfahren zum Herstellen einer bahnförmigen Matrize zum Erzeugen von strukturierten Verbundwerkstoffen, insbesondere von Oberflächen bei der Fertigung von Schichtstoffplatten im bekannten LPL-, CPL- und HPL-Verfahren, bei denen eine dekorsynchron strukturierte Dekoroberfläche mit einer insbesondere aus Papier oder Folie bestehenden flexiblen Trägerbahnschicht und einer gegen das Oberflächenmaterial trennenden, auf der Seite des Oberflächenmaterials angeordneten Schicht versehen wird, wobei die strukturierte Dekoroberfläche auf der dem Oberflächenmaterial abgewandten Seite der trennenden Schicht angeordnet wird.

EP 2 905 135 A2 beschreibt eine Materialbahn, ein Verbundmaterial und die Verwendung der Materialbahn, die eine gedruckte und geprägte Oberfläche aufweist. US 6,319,349 beschreibt ein Verfahren zur Herstellung von Kunststofffliesen.

Der vorliegenden Erfindung liegt die Aufgabe zugrunde, ein Verfahren zur Herstellung eines Produkts, d.h. einer mehrlagigen Materialbahn, mit dekorsynchron strukturierter Oberfläche bereitzustellen, welches es zudem ermöglicht, einen Verbundwerkstoff mit dekorsynchron strukturierter Oberfläche, insbesondere für die Herstellung von Fußböden, Möbel und Oberflächen für die Verkleidung von Wänden und Decken im Innenbereich von Räumen kontinuierlich und diskontinuierlich herzustellen, wobei sich das Produkt in angewandten LPL-, CPL- und HPL-Beschichtungsprozessen einsetzen lassen soll. Insbesondere soll ein Verfahren bereitgestellt werden, das es ermöglicht, die Nachteile im Stand der Technik, d.h. im kontinuierlichen Verfahren die nicht mögliche Abstimmung der gedruckten Dekorstruktur des Verbundwerkstoffs auf die Prägung des Stahlbands oder des zugeführten Trennpapiers bzw. der zugeführten Trennfolie sowie im diskontinuierlichen Verfahren die erwähnte hohe Komplexität im Herstellungsprozess, zu umgehen. Darüber hinaus soll es durch das erfindungsgemäße Verfahren auch möglich sein, dekorative und haptische Eigenschaften des hergestellten Verbundwerkstoffs zu realisieren, so dass die erzeugte Oberfläche hinsichtlich ihrer Haptik und Optik synchron und stimmig ist.

Diese Aufgabe wird durch die in den Ansprüchen gekennzeichneten Ausführungsformen der vorliegenden Erfindung gelöst.

Insbesondere wird erfindungsgemäß ein Verfahren zur Herstellung einer mehrlagigen Materialbahn, welches sich wiederum zur kontinuierlichen und diskontinuierlichen Herstellung eines Verbundwerkstoffs mit einer dekorsynchron strukturierten Dekoroberfläche einsetzen lässt, bereitgestellt, umfassend die Schritte:
(a) Bereitstellen einer mehrlagigen Materialbahn aus einem aushärtbaren bzw. vernetzbaren polymeren Material, wobei die Materialbahn auf einer Oberflächenseite mit einem aufgedruckten Dekormuster versehen ist,
(b) Aufbringen einer Kunststofffolie auf die bedruckte Seite der verwendeten bedruckten Materialbahn mittels einer Haftmittelschicht oder einer elektrostatischen Fixierung,
(c) Aufdrucken eines vorgewölbten Musters auf die Oberfläche der Kunststofffolie mit einer aushärtbaren Masse, so dass das Vorwölbungsmuster mit dem aufgedruckten Dekormuster der bedruckten Materialbahn in der Draufsicht kongruent ist,
(d) anschließendes Aushärten der vorgewölbten Masse, so dass eine bedruckte und oberflächlich strukturierte, mehrlagige Materialbahn erhalten wird,
(e) Verpressen der in Schritt (d) erhaltenen mehrlagigen Materialbahn derart, dass die oberflächlich aufgedruckte Vorwölbung gemeinsam mit der tragenden Kunststofffolie in das darunterliegende Material der mehrlagigen Materialbahn so eindringt, dass die Vorwölbungen des Vorwölbungsmusters eine zum aufgedruckten Dekormuster kongruent angeordnete Prägung erzeugen, und Aushärten bzw. Vernetzen der Materialbahn, und
(f) nachfolgend Ablösen der Kunststofffolie unter Erhalten einer dekorsynchron strukturierten Dekoroberfläche mit mechanischen Vertiefungen in Übereinstimmung zum aufgedruckten Dekormuster in der mehrlagigen Materialbahn.

Im Rahmen der vorliegenden Erfindung kann der Schritt (e) derart erfolgen, dass die in Schritt (d) erhaltene mehrlagige Materialbahn in einen kontinuierlichen oder diskontinuierlichen Weiterverarbeitungsprozess (LPL-, CPL- und HPL-Beschichtungsprozesse) zur Herstellung eines Verbundwerkstoffs eingeführt wird. Während der Verpressung der mehrlagigen Materialbahn im kontinuierlichen oder diskontinuierlichen Verfahren dringt dabei die oberflächlich aufgedruckte Vorwölbung gemeinsam mit der tragenden Kunststofffolie wiederum in das darunterliegende Material so ein, dass die Vorwölbungen des Vorwölbungsmusters eine zum aufgedruckten Dekormuster kongruent angeordnete Prägung erzeugen. Nach Aushärten bzw. Vernetzen der Materialbahn und nachfolgendem Ablösen der Kunststofffolie wird ein entsprechendes Verbundmaterial mit einer dekorsynchron strukturierten Dekoroberfläche mit mechanischen Vertiefungen in Übereinstimmung zum aufgedruckten Dekormuster in dem Verbundwerkstoff erhalten.

Der Begriff "strukturierte Dekoroberfläche" bedeutet erfindungsgemäß, dass die mehrlagige Materialbahn bzw. das finale Verbundmaterial ein- oder mehrfarbig gemustert ist und eine dekorsynchron strukturierte Oberfläche aufweist, die andere Beläge, wie zum Beispiel Keramikfliesen oder Holzparkett, optisch und/oder haptisch nachahmt. Eine solche strukturierte Dekoroberfläche kann beispielsweise bei der Darstellung von Holz- oder Steinreproduktionen verwendet werden, bei denen der Wunsch besteht, dass Holz- oder Steinporen dort zu fühlen sind, wo sie auch optisch dargestellt sind.

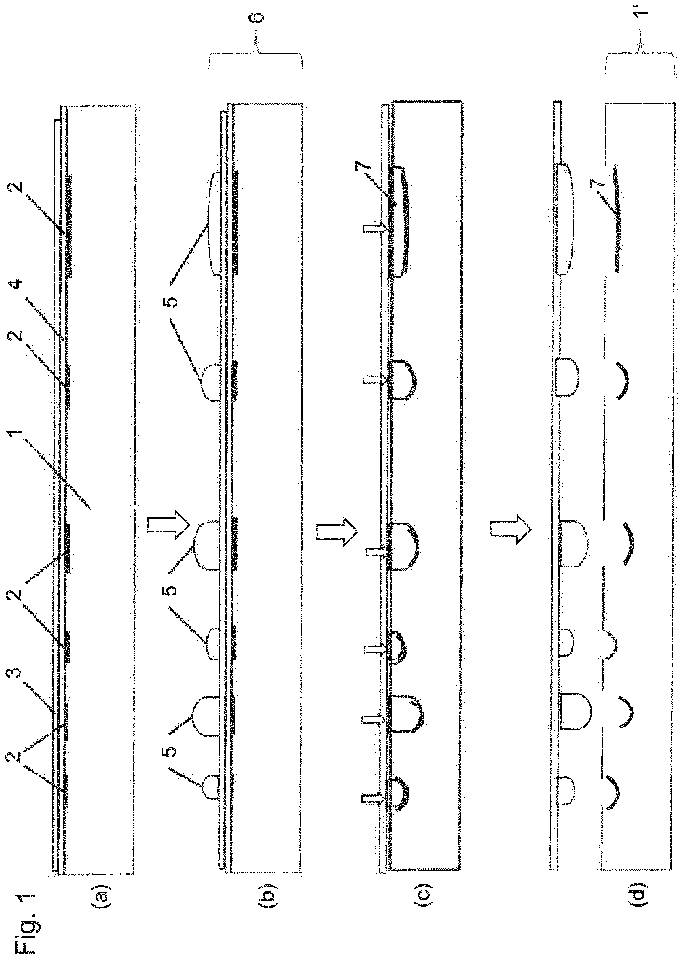

Im Schritt (a) des erfindungsgemäßen Verfahrens wird eine Materialbahn 1 (Druckträger) aus einem aushärtbaren polymeren Material bereitgestellt, wobei die Materialbahn 1 auf einer Oberflächenseite mit einem aufgedruckten Dekormuster 2 versehen ist (vgl. die Fig. 1(a) bezüglich der Darstellung der Materialbahn 1 mit aufgedrucktem Dekormuster 2).

Der Begriff "aushärtbares polymeres Material" unterliegt erfindungsgemäß keiner Einschränkung. Bevorzugt wird erfindungsgemäß ein Material verwendet, das aus der Gruppe etablierter Imprägnate, bestehend aus bedrucktem Dekorpapier mit eingetragenem Imprägnierharz wie z.B. Harnstoff- und/oder Melaminformaldehydharzen und/oder Acrylatdispersionen besteht. Insbesondere wird als aushärtbares polymeres Material ein Melaminformaldehydharz verwendet. Geeignete handelsübliche Melaminharze sind z.B. Kauramin-Typen der BASF oder Prefere-Typen der Fa. Prefere resins.

Anstelle des erwähnten klassischen Imprägnats sind auch imprägnierte bedruckte Papiermuster mit einer oberflächlich aufgetragenen Lackschicht, die mehr oder weniger vorvernetzt ist, einsetzbar.

Die bereitgestellte Materialbahn 1 weist vorzugsweise eine Dicke von 30 µm bis 300 µm, insbesondere von 80 µm bis 150 µm auf.

Das aufgedruckte Dekormuster 2 kann ein beliebiges Natural- oder Fantasiemuster, wie es üblicherweise im Bereich von Fußböden und Möbeln oder für die Innenverkleidung von Räumen (Wände und Decken) verwendet wird, wie beispielsweise ein Holzmuster oder Steinmuster, welches das Aussehen von natürlichem Holz oder Stein nachahmt, oder jedwedes andere Muster sein.

Die für das aufgedruckte Dekormuster 2 verwendete Druckfarbe ist nicht beschränkt. Beispielsweise können bekannte Farben mit casein- oder acrylatbasierenden Bindemittelsystemen und organischen oder anorganischen Farbpigmenten verwendet werden, die in wässrigen oder organischen Lösungsmitteln eingearbeitet sind.

In einer bevorzugten Ausführungsform ist das aufgedruckte Dekormuster 2 mit einer Druckfarbe hergestellt, die wärmeexpandierbare Blähkugeln enthält. Die wärmeexpandierbaren Blähkugeln expandieren bei den Temperaturbedingungen, wie sie bei der Herstellung (Imprägnierung) der Materialbahn vorliegen. Im Schritt (e) (Verpressen der mehrlagigen Materialbahn mit Aushärten der Materialbahn 1) des erfindungsgemäßen Verfahrens werden die so hergestellten Strukturen wieder komprimiert, wodurch die Lichtreflexion des Dekormusters durch Streuung vermindert ist, so dass das Dekormuster an den betroffenen Stellen matt erscheint. Dieses führt zu dem vorteilhaften Effekt, dass die Darstellung einer Pore durch das Dekormuster durch das matte Aussehen der Pore im Gegensatz zu der glänzenden Oberfläche der Umgebung der Pore, d.h. der glänzenden Oberfläche der Materialbahn 1, optisch unterstrichen wird. Die Mattierung der betroffenen Stellen vermittelt über eine optische Täuschung die Wahrnehmung einer tieferen Struktur im Vergleich zu dem umgebenden glänzenderen Dekor.

Als wärmeexpandierbare Blähkugeln können erfindungsgemäß zum Beispiel expandierende Mikrosphären von Akzo Nobel, bekannt unter dem Namen Expancel®, verwendet werden.

Im Schritt (b) des erfindungsgemäßen Verfahrens wird eine Kunststofffolie 3 auf die Oberflächenseite mit dem aufgedruckten Dekormuster 2 der Materialbahn 1 ohne oder mittels einer Haftmittelschicht 4 aufgebracht (vgl. Fig. 1(a)).

Die Kunststofffolie 3 unterliegt erfindungsgemäß keiner besonderen Beschränkung, solange sie temperaturbeständig und transparent ist. Temperaturbeständig bedeutet erfindungsgemäß, dass die Kunststofffolie 3 den marktgängig bekannten oberflächenwirksamen Temperaturen im LPL-, CPL- und HPL-Verfahren standhält.

Das Material für die Kunststofffolie 3 unterliegt ebenfalls keiner wesentlichen Beschränkung. Insbesondere kann als Kunststofffolienmaterial vorteilhaft BOPET verwendet werden.

Die Kunststofffolie 3 weist vorzugsweise eine Dicke von 20 µm bis 100 µm, mehr bevorzugt von 35 µm bis 75 µm, insbesondere von 50 µm bis 70 µm auf.

Die Haftmittelschicht 4 unterliegt erfindungsgemäß keiner besonderen Beschränkung, so dass jedwedes Material für die Haftmittelschicht verwendet werden kann, das abhängig von den für die Materialbahn 1 und die Kunststofffolie 3 verwendeten Materialien eine für den erfindungsgemäßen Zweck ausreichende Haftung zwischen der Materialbahn 1 und der Kunststofffolie 3 bereitstellt.

Spezifische Beispiele für das Material der Haftmittelschicht umfassen Melaminformaldehydharze, Polyvinylalkohol (PVA), etc.. Die Haftmittelschicht weist vorzugsweise eine Dicke von 2 µm bis 10 µm, mehr bevorzugt von 3 µm bis 8 µm, insbesondere von 4 µm auf.

Die Haftmittelschicht wird vorzugsweise mittels bewährter Applikationsverfahren für die Beschichtung von Dünnschichten (z.B. Walzenauftragsverfahren oder Sprühvorrichtungen) auf der Materialbahn 1 aufgebracht.

Im Schritt (c) des erfindungsgemäßen Verfahrens wird ein Vorwölbungsmuster aus Vorwölbungen 5 auf die Oberfläche der Kunststofffolie 3 mit einer aushärtbaren Masse aufgedruckt, so dass das Vorwölbungsmuster mit dem aufgedruckten Dekormuster 2 der Folienbahn 1 in der Draufsicht übereinstimmt. Anschließend wird die aushärtbare Masse ausgehärtet, so dass eine mehrlagige, mit einem Dekormuster bedruckte und oberflächlich mit einem Vorwölbungsmuster versehene, strukturierte Materialbahn 6 erhalten wird (vgl. Fig. 1(b)).

Der Vorgang des Aufdruckens und Aushärtens wird insbesondere in der folgenden Weise ausgeführt. Die Masse, welche die Vorwölbungen auf der oberen Kunststofffolie der mehrlagigen Materialbahn erzeugt, wird über ein auf das Verfahren abgestimmtes Druckverfahren aufgebracht. Als Druckverfahren sind insbesondere bekannte Verfahren des Digitaldrucks prädestiniert. Während des Aufdrucks der Vorwölbungen auf die Kunststofffolie werden gemeinsam mit dem Dekoraufdruck auf die Materialbahn 1 aufgebrachte Markierungen optoelektronisch abgegriffen. Die abgegriffenen Signale werden über eine vorhandene Steuerung zur Führung des Digitaldrucks verwendet, so dass die Vorwölbungen kongruent zum Dekorbild an den ausgewählten Stellen aufgetragen werden und letztlich zu einem dekorsynchron strukturierten Oberflächeneffekt beitragen.

Im Schritt (d) des erfindungsgemäßen Verfahrens wird die mehrlagige Materialbahn 6 verpresst und ausgehärtet. Dies kann in einer vorteilhaften Gestaltung des erfindungsgemäßen Verfahrens in einem kontinuierlichen oder diskontinuierlichen Weiterverarbeitungsprozess (LPL-, CPL- bzw. HPL-Verfahren) erfolgen. Dabei wird die bedruckte Materialbahn 6 so verpresst, dass die Vorwölbungen 5 des Vorwölbungsmusters in die Kunststofffolie 3 und in die Materialbahn 1 eindringen und Vertiefungen 7 in Übereinstimmung mit dem Dekormuster 2 erzeugen, die zu den Vorwölbungen 5 des Vorwölbungsmusters komplementär sind. Anschließend wird die Materialbahn 1 ausgehärtet (vgl. Fig. 1(c)).

Der Vorgang des Verpressens und Aushärtens kann in branchenüblich angewandten Verfahren zur Herstellung von Verbundwerkstoffen (Laminate, Schichtstoffplatten bzw. Verpressungen auf Holzfaserwerkstoffen wie beispielsweise Spanplatten, MDF-Platten oder Sperrholzplatten) durch Nutzung gängiger Technologien in LPL-, CPL- bzw. HPL-Verfahren erfolgen.

Als Richtwerte für die Verpressungen gelten beispielhaft:

| | | |
|---|---|---|
| LPL (Low Pressure Laminate) | Presstemperatur: | 190 °C |
| | Pressdruck: | 22 bar |
| | Presszeit: | 10 - 30 sec. |
| | | |
| CPL (Continuous Pressure Laminate) | Presstemperatur: | 190° C |
| | Pressdruck: | 15 - 70 bar |
| | Vorschub: | 8 -18 m/min |
| | | |
| HPL (High Pressure Laminate) | Presstemperatur: | 140° C |
| | Pressdruck: | 80 - 100 bar |
| | Presszeit: | 45 min |

Im Markt gängig sind kundenspezifische Anpassungen der Einflußgrößen Temperatur, Druck und Zeit der Verpressungen, abgestimmt auf die jeweils eingesetzten Materialien, die Produktionsrahmenbedingungen und die gewünschten Qualitätsanforderungen.

Im Schritt (e) des erfindungsgemäßen Verfahrens wird die Kunststofffolie 3 abgelöst, so dass eine Materialbahn 1' mit einer dekorsynchron strukturierten Dekoroberfläche mit Vertiefungen 7 in Übereinstimmung mit dem Dekormuster 2 erhalten wird (vgl. Fig. 1 (d)). Erfolgt Schritt (e) bereits in einem kontinuierlichen oder diskontinuierlichen Weiterverarbeitungsprozess (LPL-, CPL- bzw. HPL-Verfahren), so wird dann in Schritt (e) ein entsprechender Verbundwerkstoff erhalten.

Die aufgebrachte Folie lässt sich gemeinsam mit den aufgedruckten Vorwölbungen nach dem Verpressen der mehrlagigen Materialbahn bzw. des erzeugten Verbundwerkstoffs ohne große Krafteinwirkung abziehen. Der Zeitpunkt des Abziehens nimmt keinen Einfluss auf die Haftungseigenschaften der Folie.

Bei der Verpressung von Imprägnaten, die korundhaltige Anteile zur Erzielung höherer Abriebwerte und Kratzbeständigkeiten des hergestellten Verbundwerkstoffs beinhalten, verhindert die aufgebrachte Kunststofffolie zusätzlich eine mechanische Zerstörung der verwendeten Stahlbänder bzw. Pressbleche sowie von Leitspindeln durch die abrasiven Eigenschaften des einwirkenden Korunds.

Im Rahmen der vorliegenden Erfindung kann im Schritt (b) des erfindungsgemäßen Verfahrens die Materialbahn 1 mit aufgebrachter Kunststofffolie 3 bedarfsweise in Rollenform für die Weiterverarbeitung als CPL aufgewickelt oder für die Weiterverarbeitung als LPL oder HPL in Einzelbogen formatiert werden.

Die vorliegende Erfindung ermöglicht die Herstellung einer mehrschichtigen Materialbahn mit dekorsynchron strukturierter Oberfläche bzw. eines Verbundwerkstoffs (Laminat, Schichtstoff, beschichtete Holzfaserplatte) mit einer dekorsynchron strukturierten Dekoroberfläche mittels eines kontinuierlichen und diskontinuierlichen Verfahrens, wodurch die Herstellung gegenüber Verfahren des Standes der Technik erheblich vereinfacht oder überhaupt erst ermöglicht wird. Die erfindungsgemäß erzeugte Materialbahn eignet sich hervorragend zur Verwendung zum Beispiel als Dekorfolie für Fußböden, Möbel und im Innenausbau. Durch die erfindungsgemäß erzeugte Materialbahn können vorteilhafterweise gewöhnliche Bodenbeläge, wie zum Beispiel Keramikfliesen oder Parkettböden, oder natürliche Holzoberflächen für z.B. Möbel oder Türen, sowohl optisch als auch haptisch weitgehend vorlagengetreu nachgeahmt werden.

### Die Figur zeigt:

- Fig. 1:: Schritte (a) bis (e) des Verfahrens gemäß der vorliegenden Erfindung.

### Bezugszeichenliste

- 1: Materialbahn als Dekordruckträger
- 1': Bedruckte Materialbahn mit dekorsynchron strukturierter Dekoroberfläche
- 2: Aufgedrucktes Dekormuster auf Materialbahn 1
- 3: Kunststofffolie
- 4: Haftmittelschicht
- 5: Vorwölbung
- 6: Bedruckte Materialbahn
- 7: Vertiefung

## Patentansprüche

1. Verfahren zur Herstellung einer mehrlagigen Materialbahn mit dekorsynchron strukturierter Oberfläche (1'), umfassend die Schritte:
(a) Bereitstellen einer mehrlagigen Materialbahn (1) aus einem aushärtbaren bzw. vernetzbaren polymeren Material, wobei die Materialbahn (1) auf einer Oberflächenseite mit einem aufgedruckten Dekormuster (2) versehen ist,
(b) Aufbringen einer Kunststofffolie (3) auf die bedruckte Seite der verwendeten bedruckten Materialbahn mittels einer Haftmittelschicht (4) oder einer elektrostatischen Fixierung,
(c) Aufdrucken eines vorgewölbten Musters (5) auf die Oberfläche der Kunststofffolie (3) mit einer aushärtbaren Masse, so dass das Vorwölbungsmuster (5) mit dem aufgedruckten Dekormuster (2) der bedruckten Materialbahn (6) in der Draufsicht kongruent ist,
(d) anschließendes Aushärten der vorgewölbten Masse, so dass eine bedruckte und oberflächlich strukturierte, mehrlagige Materialbahn (6) erhalten wird,
(e) Verpressen der in Schritt (d) erhaltenen mehrlagigen Materialbahn derart, dass die oberflächlich aufgedruckte Vorwölbung (5) gemeinsam mit der tragenden Kunststofffolie (3) in das darunterliegende Material der mehrlagigen Materialbahn (1) so eindringt, dass die Vorwölbungen (5) des Vorwölbungsmusters eine zum aufgedruckten Dekormuster (2) kongruent angeordnete Prägung erzeugen, und Aushärten bzw. Vernetzen der Materialbahn (1), und
(f) nachfolgend Ablösen der Kunststofffolie (3) unter Erhalten einer dekorsynchron strukturierten Dekoroberfläche mit mechanischen Vertiefungen (7) in Übereinstimmung zum aufgedruckten Dekormuster (2) in der mehrlagigen Materialbahn (1').

2. Verfahren nach Anspruch 1, wobei das aushärtbare polymere Material aus einem Kondensationsharz, insbesondere Melaminharzen und/oder Harnstoffharzen, und/oder acrylatischen Polymerdispersionen ausgewählt ist.

3. Verfahren nach Anspruch 1 oder 2, wobei die Kunststofffolie (3) eine PET-Folie ist.

4. Verfahren nach einem der Ansprüche 1 bis 3, wobei die Haftmittelschicht (4) aus einem Melaminharz oder einem PVA-Haftmittel ausgebildet ist.

5. Verfahren nach 1 bis 4, wobei die Haftung der Kunststofffolie (3) auf der Materialbahn (1) durch elektrostatische Ladungen erfolgt.

6. Verfahren nach einem der Ansprüche 1 bis 5, wobei die aushärtbare Masse strahlenvernetzend getrocknet wird.

7. Verfahren nach Anspruch 6, wobei die strahlenaushärtbare Masse aus der Gruppe, bestehend aus strahlenhärtenden Monomeren und Oligomeren ausgewählt ist.

8. Verfahren nach einem der Ansprüche 1 bis 7, wobei das aufgedruckte Dekormuster (2) mit einer Druckfarbe, die wärmeexpandierbare Blähkugeln enthält, aufgedruckt worden ist.

9. Verfahren nach Anspruch 8, wobei im Schritt (d) ein mattiertes dekorsynchrones Dekormuster erhalten wird.

10. Verfahren nach einem der Ansprüche 1 bis 9, wobei im Schritt (b) die Materialbahn (1) mit aufgebrachter Kunststofffolie (3) in Rollenform aufgewickelt oder in Bogenware formatiert wird.

11. Verfahren nach einem der Ansprüche 1 bis 10, wobei im Schritt (c) die in einem kontinuierlichen Prozess hergestellte bedruckte Materialbahn (6) in Rollenform aufgewickelt wird.

12. Verfahren nach einem der Ansprüche 1 bis 11, wobei die Vertiefungen (7) eine Tiefe von 10 µm bis 150 µm aufweisen.

13. Verfahren nach einem der Ansprüche 1 bis 12, wobei der Schritt (e) derart durchgeführt wird, dass die in Schritt (d) erhaltene mehrlagige Materialbahn (1') in einen kontinuierlichen oder diskontinuierlichen Weiterverarbeitungsprozess (LPL-, CPL- und HPL-Beschichtungsprozesse) zur Herstellung eines Verbundwerkstoffs eingeführt wird und nach Aushärten der Materialbahn (1') und nachfolgendem Ablösen der Kunststofffolie (3) ein entsprechendes Verbundmaterial mit einer dekorsynchron strukturierten Dekoroberfläche mit mechanischen Vertiefungen (7) in Übereinstimmung zum aufgedruckten Dekormuster in dem Verbundwerkstoff erhalten wird.

## Claims

1. A method for producing a multilayer material web with a decor synchronously structured surface (1'), comprising the steps of:
(a) providing a multilayer material web (1) of a curable polymeric material, wherein the material web (1) is provided on a surface side with a printed decor pattern (2),
(b) applying a plastic film (3) on the printed side of the printed material web used by means of an adhesive layer (4) or an electrostatic fixing,
(c) imprinting a pre-bulged pattern (5) on the surface of the plastic film (3) with a curable mass, so that the pre-bulged pattern (5) is congruent with the printed decor pattern (2) of the printed material web (6) in plan view,
(d) subsequent curing of the pre-bulged mass, so that a printed and surface-structured, multilayer material web (6) is obtained,
(e) pressing the multilayer material web obtained in step (d) such that the surface-printed pre-bulging (5) together with the supporting plastic film (3) penetrates into the underlying material of the multilayer material web (5) such that pre-bulgings (5) of the pre-bulged pattern produces a stamping arranged congruently with the printed decor pattern (2), and hardening or, respectively, crosslinking the web (1), and
(f) subsequently peeling off the plastic film (3) to obtain a decor synchronously structured decor surface having mechanical indentations (7) in accordance with the printed decor pattern (2) in the multilayer web (1').

2. The method of claim 1, wherein the curable polymeric material is selected from a condensation resin, in particular melamine resins and / or urea resins, and / or acrylic polymer dispersions.

3. The method according to claim 1 or 2, wherein the plastic film (3) is a PET film.

4. The method according to any one of claims 1 to 3, wherein the adhesive layer (4) is formed of a melamine resin or a PVA adhesive.

5. The method according to 1 to 4, wherein the adhesion of the plastic film (3) on the material web (1) takes place by electrostatic charges.

6. The method according to any one of claims 1 to 5, wherein the curable mass is dried by radiation crosslinking.

7. The method of claim 6, wherein the radiation-curable composition is selected from the group consisting of radiation-curing monomers and oligomers.

8. The method according to any one of claims 1 to 7, wherein the printed decor pattern (2) has been printed with a printing ink containing heat-expandable inflating spheres.

9. The method according to claim 8, wherein in step (d) a matt decor synchronous decor pattern is obtained.

10. The method according to any one of claims 1 to 9, wherein in step (b) the material web (1) with applied plastic film (3) is wound up in roll form or formatted in sheet form.

11. The method according to any one of claims 1 to 10, wherein in step (c) the printed material web (6) produced in a continuous process is wound up in roll form.

12. The method according to any one of claims 1 to 11, wherein the indentations (7) have a depth of 10 microns to 150 microns.

13. The method according to any one of claims 1 to 12, wherein the step (e) is carried out such that the multilayer material web (1') obtained in step (d) is introduced in a continuous or discontinuous further processing process (LPL, CPL and HPL coating processes) for producing a composite material and after curing of the web (1') and subsequent detachment of the plastic film (3), a corresponding composite material is obtained with a decor synchronously textured decorative surface with mechanical indentations (7) in accordance with the printed decor pattern in the composite material.

## Revendications

1. Procédé pour la fabrication d'une bande de matériau multicouche comportant une surface (1') structurée en registre avec son motif de décoration, comportant les étapes :
(a) mise à disposition d'une bande de matériau multicouche (1) en un matériau polymère durcissable ou réticulable, la bande de matériau (1) étant munie sur une face d'un motif de décoration imprimé (2),
(b) application d'une feuille en matière synthétique (3) sur la face imprimée de la bande imprimée utilisée, moyennant une couche adhésive (4) ou par fixation électrostatique,
(c) impression d'un motif préembossé (5) sur la face de la feuille en matière synthétique (3) avec une masse durcissable de telle sorte que le motif préembossé (5) est congruent avec le motif de décoration imprimé (2) de la bande de matériau imprimée (6) selon une vue en plan,
(d) ensuite durcissement de la masse préembossée de façon à obtenir une bande de matière multicouche (6) imprimée et structurée en surface,
(e) compression de la bande de matériau multicouche obtenue à l'étape (d) de telle sorte que le motif préembossé imprimé en surface (5) pénètre conjointement avec la feuille portante en matière synthétique (3) dans la matière sous-jacente de la bande de matériau multicouche de telle sorte que les préembossages (5) du motif préembossé génèrent une empreinte agencée de manière congruente avec le motif de décoration imprimé (2), et durcissement ou réticulation de la bande de matériau multicouche (1), et
(f) ensuite, enlèvement de la feuille en matière synthétique (3) tout en obtenant une surface de décoration structurée en registre avec son motif de décoration comportant des enfoncements mécaniques (7) dans la bande de matériau multicouche (1'), en registre avec le motif de décoration imprimé (2).

2. Procédé selon la revendication 1 dans lequel la matière polymère durcissable est choisie parmi les résines de condensation, notamment des résines de mélamine et/ou des résines d'urée, et/ou des dispersions polymères d'acrylates.

3. Procédé selon la revendication 1 ou 2 dans lequel la feuille en matière synthétique (3) est une feuille de PET.

4. Procédé selon l'une des revendications 1 à 3 dans lequel la couche adhésive (4) est constituée d'une résine de mélamine ou d'un agent adhésif à base de PVA.

5. Procédé selon l'une des revendications 1 à 4 dans lequel l'adhésion de la feuille synthétique (3) sur la bande de matériau (1) s'effectue par des charges électrostatiques.

6. Procédé selon l'une des revendications 1 à 5 dans lequel la masse durcissable est séchée par réticulation par rayonnement.

7. Procédé selon la revendication 6 dans lequel la masse durcissable par rayonnement est choisie parmi le groupe constitué par les monomères et oligomères durcissables par rayonnement.

8. Procédé selon l'une des revendications 1 à 7 dans lequel le motif de décoration imprimé (2) a été imprimé avec une couleur d'impression qui comprend des billes gonflables expansibles à la chaleur.

9. Procédé selon la revendication 8 dans lequel on obtient à l'étape (d) un motif de décoration dépoli en registre avec le motif de décoration.

10. Procédé selon l'une des revendications 1 à 9 dans lequel, à l'étape (b), la bande de matériau (1) avec la feuille en matière synthétique (3) qui y est appliquée est enroulée en forme de rouleau ou formée en feuille.

11. Procédé selon l'une des revendications 1 à 10 dans lequel, à l'étape (c), la bande de matériau imprimée (6) obtenue selon un procédé en continu est enroulée en forme de rouleau.

12. Procédé selon l'une des revendications 1 à 11 dans lequel les enfoncements (7) présentent une profondeur de 10 µm à 150 µm.

13. Procédé selon l'une des revendications 1 à 12 dans lequel l'étape (e) est effectuée de telle sorte que la bande de matériau multicouche (1') obtenue à l'étape (d) est introduite dans un procédé de traitement ultérieur continu ou discontinu (des procédés d'enduction LPL (low pressure laminate), CPL (continuous pressure laminate) ou HPL (high pressure laminate)) pour la fabrication d'un matériau composite, et on obtient, après durcissement de la bande de matériau (1') et ensuite enlèvement de la feuille en matière synthétique (3), un matériau composite correspondant qui comporte une surface de décoration structurée en registre avec le motif de décoration ayant des enfoncements mécaniques (7) dans la bande de matériau multicouche (1'), en registre avec le motif de décoration imprimé (2).
